# EUROPÄISCHE PATENTANMELDUNG

(11) **EP 1 445 568 A2**
(43) Veröffentlichungstag der Anmeldung: **11.08.2004**
(21) Anmeldenummer: 04001513.3
(22) Anmeldetag: 24.01.2004
(51) Int. Cl.: F28D 1/04

(54) **Wärmetauscherbaueinheit**

(30) Priorität: 29.01.2003 DE 10303416
(71) Anmelder: Voith Turbo GmbH & Co. KG, 89522 Heidenheim (DE)
(72) Erfinder: Scheerer, Jörg, 89542 Herbrechtingen (DE); Busch, Jörg, Dr., 89551 Königsbronn-Zang (DE)
(74) Vertreter: Dr. Weitzel & Partner

(57) **Zusammenfassung**

Die Erfindung betrifft eine Wärmetauscherbaueinheit in optimierter Bauweise zur Anordnung an oder in drehmomenterzeugenden oder drehmomentübertragenden Antriebskomponenten mit mindestens einem Wärmetauschermodul.

Die Erfindung ist dadurch gekennzeichnet, dass die Geometrie der Außenabmessung der Wärmetauscherbaueinheit derart gewählt ist, dass diese sich in radialer Richtung wenigstens über einen Teilbereich in Umfangsrichtung um einen An- oder Abtrieb erstrecken.

## Beschreibung

Die Erfindung betrifft eine Wärmetauscherbaueinheit in bauraumoptimierter Bauweise, im einzelnen mit dem Merkmal aus dem Oberbegriff des Anspruchs 1.

Wärmetauscherbaueinheiten sind in einer Vielzahl von Ausführungen bekannt. Diese dienen im allgemeinen dem Austausch von Wärme zwischen zwei Kreisläufen und werden vor allem zur Kühlung von Betriebsmitteln in Antriebsaggregaten verwendet. Bezüglich möglicher Ausführungen und Grundbauarten kann beispielsweise auch auf Buschmann, Koessler: "Handbuch der Kraftfahrzeugtechnik", 1973 verwiesen werden. Dabei sind im allgemeinen zwei getrennte Kreisläufe vorgesehen, ein erster Kreislauf für das Kühlmittel und ein zweiter für das Betriebsmittel, welches normalerweise als Öl vorliegt. Der Wärmetauscher selbst weist dazu jeweils mindestens einen zentralen Zufuhrkanal und einen zentralen Abfuhrkanal für das Betriebsmittel und das Kühlmittel auf. Dabei durchfließt das Betriebsmittel den Wärmetauscher in als Kühlschlange bezeichneten Kanälen, welche von Kühlmittel oder Kühlmedium umspült werden. Infolge der Wärmeleitung von Betriebsmittel zum Kühlmittel beziehungsweise Kühlmedium verringert sich dann dessen Temperatur. Die Wärmetauscherbaueinheiten sind in der Regel an beliebiger Stelle im Antriebssystem angeordnet, so dass Verbindungsleitungen zwischen den Antriebskomponenten und dem Wärmetauscher zu schaffen sind. Des weiteren sind Ausführungen bekannt, bei denen der Wärmetauscher am Gehäuse angeflanscht ist. Bei diesen Ausführungen wird jedoch bei der Auslegung der Antriebskomponente der benötigte Bauraum für die Wärmetauschereinheit mit berücksichtigt. Die Wärmetauscherbaueinheiten weisen dabei in der Regel einen sehr einfachen geometrischen Aufbau auf, welcher eine leichte Integration ermöglicht. Allerdings muss der in radialer als auch axialer Richtung erforderliche Bauraum für den Wärmetauscher mit berücksichtigt werden beziehungsweise die entsprechenden erforderlichen Verbindungsleitungen bei Anordnung des Wärmetauschers in räumlicher Entfernung zur Antriebskomponente.

Der Erfindung liegt daher die Aufgabe zugrunde, eine Wärmetauscherbaueinheit in bauraumoptimierter Bauweise zu schaffen, welche zur Anordnung in unmittelbarer räumlicher Nähe der Antriebskomponente geeignet ist und nur minimale Anforderungen an den zur Verfügung zu stellenden Bauraum stellt.

Die erfindungsgemäße Lösung ist durch die Merkmale des Anspruchs 1 charakterisiert. Vorteilhafte Ausgestaltungen sind in den Unteransprüchen beschrieben.

Die Wärmetauscherbaueinheit in bauraumoptimierter Bauweise zur Anordnung an oder in einer drehmomenterzeugenden/drehmomentwandelnden oder übetragenden Antriebskomponente umfasst mindestens einen Wärmetauschermodul, mit wenigstens einer zentralen Zufuhrleitung für Betriebsund/oder Steuer- und/oder Schmiermittel sowie einen zentralen Zufuhrkanal für das Kühlmedium, des weiteren wenigstens einen zentralen Abfuhrkanal für das gekühlte Betriebs- und/oder Schmier- und/oder Steuermittel und das Kühlmedium. Die geometrische Ausgestaltung der Wärmetauscherbaueinheit erfolgt erfindungsgemäß derart, dass dieser mit seiner Außenkontur wenigstens teilweise den An- oder Abtrieb einer drehmomenterzeugenden oder drehmomentübertragenden Antriebskomponente umschließen kann. Dies bedeutet, dass die Wärmetauscherbaueinheit sich in Umfangsrichtung erstreckt. Diese umschließt dabei vorzugsweise den An- oder Abtrieb in einem Winkel von > 90 Grad bis ≤ 360 Grad. Besonders vorteilhaft auch bezüglich einer möglichen Montage und Demontage sind Ausführungen, die den Wärmetauscher in einem Winkelbereich von einschließlich 180 Grad bis < 270 Grad umschließen. Bei derartigen Ausführungen kann aufgrund der größeren zur Verfügung stehenden Kühlflächen eine höhere Kapazität erzielt werden, wobei gleichzeitig durch die Anordnung um einen An- oder Abtrieb einer drehmomenterzeugenden oder drehmomentübertragenden Antriebskomponente ohnehin vorhandener, in der Regel nicht genutzter Bauraum in radialer Richtung ausgenutzt wird. Die Wärmetauscherbaueinheit umschließt somit einen An- oder Abtrieb, welcher auch als An- oder Abtriebswelle vorliegen kann, in radialer Richtung wenigstens über einen Teilbereich in Umfangsrichtung. Für die Anordnung der Wärmetauscherbaueinheit sind dabei vorzugsweise An- oder Abtriebe, beispielsweise in Form von Wellen mit geringem Durchmesser geeignet, da hier der in radialer Richtung zur Verfügung stehende Bauraum am größten ist.

Bezüglich der konkreten Ausgestaltung der Wärmetauscherbaueinheit und der Erzeugung der Geometrie bestehen eine Vielzahl von Möglichkeiten. Dabei werden grundsätzlich Ausführungen unterschieden, welche lediglich aus einem Wärmetauschermodul bestehen oder mehreren. Bei Ausführungen mit einem Wärmetauschermodul umfasst dieses mindestens einen zentralen Zufuhrkanal und mindestens einen zentralen Abfuhrkanal für das zu kühlende Betriebsund/oder Steuer- und/oder Schmiermittel sowie einen zentralen Zufuhr- und einen zentralen Abfuhrkanal für das Kühlmedium. Die Zuführ- und Abführkanäle sind dabei über Verbindungskanäle miteinander gekoppelt. Diese werden für das Betriebs- und/oder Steuer- und/oder Schmiermittel als Betriebs- und/oder Steuerund/oder Schmiermittelführungskanäle und für das Kühlmedium als Kühlmittelkanal bezeichnet. Bezüglich der konkreten Führung dieser einzelnen Kanäle in dem Wärmetauschermodul bestehen ebenfalls eine Vielzahl von Möglichkeiten, dies hängt jedoch von der konkreten Auswahl der Art des Wärmetauschertyps ab - beispielsweise Schalen- oder Plattenbauweise. Die Begriffe Leitung oder Kanal sind hier nicht so zu verstehen, dass es sich zwangsläufig um entsprechende konstruktive Merkmale handeln muss, die unbedingt einer Leitung entsprechen, sondern diese sollen lediglich die Funktion wiedergeben, d. h. die Verbindungsmöglichkeit, die durch Kanäle in Wänden oder aber einzelne rohrförmige Führungselemente gegeben sein kann. Des weiteren ist ein Gehäuse vorgesehen, an welchem die Anschlüsse für die Zufuhr und die Abfuhr vorgesehen sind und in deren Innerem die Verbindungskanäle angeordnet werden. Die äußere Kontur wird dabei durch die Form des Gehäuses beschrieben, welche zur Ausführung mit wenigstens teilweiser Umschlingung in Umfangsrichtung mit einer entsprechenden Geometrie zu versehen ist. Dabei kann das Gehäuse im einfachsten Fall U-förmig ausgebildet sein, wobei die beiden Schenkel beidseitig der An- beziehungsweise Abtriebswelle angeordnet sind oder aber im Querschnitt betrachtet in Form eines Kreisringsegmentes oder kreisförmig. Die einteilige Ausführung der Wärmetauscherbaueinheit bietet den Vorteil einer hohen Kompaktheit.

Besonders vorteilhafte Ausführungen bestehen darin, standardisierte Wärmetauschermodule zu verwenden und diese zur Baueinheit zusammenzufassen. Damit kann optimal auf die vorgegebenen Bauraumsituationen reagiert werden. Insbesondere können dabei zur optimalen Ausnutzung des zur Verfügung stehenden Bauraumes auch hinsichtlich ihrer Abmessungen unterschiedliche Wärmetauschermodule verwendet werden, die zur Baueinheit zusammengefasst werden. Dabei besteht vor allem die Möglichkeit auf vorgefertigte standardisierte Wärmetauschermodule zurückzugreifen, was insbesondere auch eine einfache Austauschbarkeit bei Defekt gewährleistet.

Bei Ausführungen mit Wärmetauschermodulen wird dabei zwischen Ausführungen mit
a) zwei Wärmetauschermodulen
b) drei Wärmetauschermodulen
c) vier Wärmetauschermodulen
d) mehr als vier Wärmetauschermodulen
unterschieden.

Bei Ausführungen mit zwei Wärmetauschermodulen umfasst jeder Wärmetauschermodul jeweils einen zentralen Zufuhr- und einen zentralen Abfuhrkanal für das zu kühlende Betriebs- und/oder Schmier- und/oder Steuermittel und das Kühlmedium. Die Wärmetauschermodule sind beidseitig eines An- oder Abtriebes, vorzugsweise einer An- oder Abtriebswelle einer drehmomenterzeugenden oder drehmomentübertragenden Antriebskomponente angeordnet, vorzugsweise spiegelbildlich. Die Kopplung erfolgt dabei über entsprechende Verbindungsleitungen zwischen den Zu- und Abführkanälen der einzelnen Wärmetauschermodule. Dabei können die beiden Wärmetauschermodule sowohl hinsichtlich der kühlmediumführenden Kanäle als auch der betriebs- und/oder steuer- und/oder schmiermittelführenden Kanäle miteinander verbunden werden. Denkbar ist es jedoch auch, lediglich die Betriebsund/oder Steuer- und/oder Schmiermittelkanäle miteinander zu koppeln, während beide Wärmetauschermodule mit einem separaten Kühlmediumdurchfluss versehen werden.

Eine weitere Möglichkeit besteht darin, die Wärmetauschermodule lediglich aus betriebs- und/oder steuer- und/oder schmiermittelführenden Einheiten zusammenzusetzen, die miteinander über entsprechende Verbindungsleitungen gekoppelt sind, wobei diese betriebs- und/oder schmier- und/oder steuermittelführenden Einheiten in einem Gehäuse integriert werden, welches gleichzeitig als Kühlmediumführungskanal dient. In diesem Fall ist das Gehäuse mit einem zentralen Kühlmediumzufuhr und -abfuhrkanal versehen. Die Kontur des Wärmetauschers wird dabei weitestgehend wiederum durch das Gehäuse bestimmt.

Ausführungen mit mehr als zwei Modulen sind dadurch charakterisiert, dass die Module in Umfangsrichtung hintereinander angeordnet werden und miteinander gekoppelt sind, so dass eine Modulkette den An- beziehungsweise Abtrieb einer drehmomentübertragenden oder drehmomenterzeugenden Einrichtung wenigstens teilweise in Umfangsrichtung umschließt. Dabei werden die Zu- und Abführkanäle der einzelnen Module jeweils mit dem benachbarten Modul gekoppelt, ausgenommen dem ersten und letzten Wärmetauschermodul.

Generell sind Anordnungen des einzelnen Zu- und Abfuhrkanals bzw. bei Vorsehen mehrerer einzelner Zu- und Abfuhrkanäle für das zu kühlende Betriebsmittel, Steuer- und/oder Schmiermittel und des/der Zu- und Abfuhrkanal/kanäle für das Kühlmittel möglich, die eine Gleichstromanordnung (d. h. Betriebsmittel und Kühlmittel fließen in einer Richtung) oder eine Gegenstromanordnung (d. h. Betriebsmittel und/oder Schmiermittel und/oder Steuermittel und Kühlmittel durchfließen in unterschiedlichen Richtungen die Wärmetauscherbaueinheit) möglich. Letztere Variante bietet den Vorteil eines besseren Wärmeüberganges und damit Wirkungsgrades. Auch Kombinationen beider Möglichkeiten sind denkbar.

Bezüglich des zu kühlenden Mediums und der Ausführung der zugehörigen Kreisläufe bestehen ebenfalls eine Vielzahl von Möglichkeiten. So können in der Wärmetauscherbaueinheit und/oder sogar in einem einzigen Wärmetauschermodul mehrere Kreisläufe gebildet werden. Dabei kann es sich um mehrere unabhängige Betriebsmittel- und/oder Schmiermittel- und/oder Steuermittelkreisläufe handeln, wobei das Betriebsmittel und Steuermittel und/oder Schmiermittel auch in voneinander getrennten Kreisläufen geführt werden kann.

Gemäß einer besonders vorteilhaften Ausführung kann die einzelne Wärmetauscherbaueinheit oder auch das einzelne Modul vom Kühlmittel und/oder dem zu kühlenden Medium sowohl einfach als auch mehrfach, beispielsweise doppelt durchflossen werden. Dies gilt insbesondere für Wärmetauscherbaueinheiten bzw. Module in Plattenbauweise. Die Zu- und Abläufe können dann, je nach Anzahl der Durchflüsse, auf einer Seite oder auf unterschiedlichen Seiten liegen.

Bezüglich möglicher Anordnungen einer erfindungsgemäß gestalteten Wärmetauscherbaueinheit sind folgende Möglichkeiten denkbar:
a) am Gehäuse einer Antriebskomponente angeflanscht
b) im Gehäuse integriert
c) im Gehäuse zwischen drehmomentübertragenden beziehungsweise wandelnden Einrichtungen integriert.

Neben der Reihenschaltung einzelner Module ist auch eine Parallelschaltung von Modulen sowie ganzer Wärmetauscherbaueinheiten möglich.

Die Wahl der konkreten Anordnungsmöglichkeit liegt dabei im Ermessen des zuständigen Fachmannes und richtet sich nach den konstruktiven Gegebenheiten, insbesondere Befestigungsmöglichkeiten für die Wärmetauscherbaueinheit und des zur Verfügung stehenden Bauraumes in radialer Richtung.

Die Befestigung der Wärmetauscherbaueinheit kann formschlüssig und/oder kraftschlüssig erfolgen. Vorzugsweise wird immer eine lösbare Verbindung angestrebt.

Das Wärmetauschergehäuse, insbesondere Gehäuse der Wärmetauscherbaueinheit oder einzelner Module kann vom Wärmetauscher selbst, insbesondere den Medien führenden Wänden (Plattenwärmetauscher) oder auch dem Gehäuse der drehmomentübergebenden bzw. wandelnden Einheiten, beispielsweise dem Getriebegehäuse oder Teilelementen dessen, wie beispielsweise An- oder Abtriebsdeckel, gebildet werden.

Die erfindungsgemäße Lösung ist nachfolgend anhand von Figuren erläutert. Darin ist im einzelnen folgendes dargestellt:
- Fig. 1 a u. 1 b: verdeutlichen Ausführungen von erfindungsgemäß gestalteten Wärmetauscherbaueinheiten, umfassend einen Wärmetauschermodul;
- Fig. 2a bis 2d: verdeutlichen Ausführungen von erfindungsgemäß gestalteten Wärmetauscherbaueinheiten aus mehreren Wärmetauschermodulen;
- Fig. 3a bis 3c: verdeutlichen Anordnungsmöglichkeiten erfindungsgemäß gestalteter Wärmetauscherbaueinheiten.

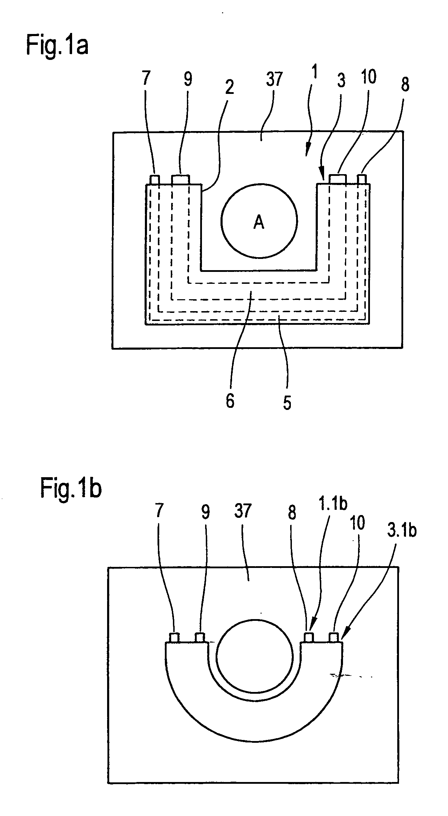

Die Figur 1 verdeutlicht in stark schematisierter Darstellung das Grundprinzip der Ausgestaltung einer erfindungsgemäßen Wärmetauscherbaueinheit 1 in Bauraum optimierter Bauweise. Die Wärmetauscherbaueinheit 1 ist dabei in unmittelbarer räumlicher Nähe zu einer Antriebskomponente, insbesondere drehmomenterzeugenden oder übertragenden Komponente, beispielsweise in Form einer Antriebsmaschine oder einer Getriebebaueinheit, angeordnet, in dieser integriert oder an deren Gehäuse 37 befestigt. Erfindungswesentlich ist, dass die äußere Kontur 2 der Wärmetauscherbaueinheit 1 derart ausgeführt ist, dass diese in Umfangsrichtung einen An- oder Abtrieb, insbesondere eine An- oder Abtriebswelle E oder A einer Antriebskomponente in Umfangsrichtung wenigstens teilweise umschließt. Die Wärmetauscherbaueinheit 1 kann dabei unterschiedlich ausgeführt sein, umfasst jedoch mindestens einen Wärmetauschermodul 3. Dieser ist gemäß Figur 1 in seiner Formgebung derart ausgeführt, dass dieser in platzsparender Weise um eine An- und/oder Abtriebswelle E bzw. A angeordnet werden kann, diese in Umfangsrichtung wenigstens teilweise umschließt und somit den ansonsten nicht genutzten Bauraum ausfüllt. Der Wärmetauschermodul 3 umfasst dabei ein Gehäuse 4, wenigstens einen im Gehäuse 4 angeordneten Kanal zur Führung des von der Antriebskomponente zu kühlenden Mediums, nachfolgend daher als Betriebs- und/oder Steuer- und/oder Schmiermittel-Führungskanal 5 bezeichnet und wenigstens einen, in unmittelbarer Nähe zu diesem geführten Kühlmittelkanal 6, wobei während des Durchströmens ein Wärmeübergang vom Betriebs- und/oder Steuer- und/oder Schmiermittel aus dem dafür vorgesehenen Führungskanal 5 zum Kühlmedium im Kühlmittelkanal 6 erfolgt. Vorzugsweise sind jeweils eine Vielzahl von wechselweise angeordneten Betriebs- und/oder Steuer- und/oder Schmiermittel-Führungskanälen 5 und Kühlmittelkanälen 6 vorgesehen. Den Betriebs- und/oder Steuer- und/oder Schmiermittel-Führungskanälen 5 ist vorzugsweise ein gemeinsamer Zuführkanal 7 und ein gemeinsamer Abführkanal 8 für Betriebs- und/oder Steuer- und/oder Schmiermittel zugeordnet. Denkbar sind jedoch auch Ausführungen mit mehreren Zu- und Abführkanälen 7 beziehungsweise 8. Dies ist jedoch abhängig vom Aufbau des Wärmetauschermoduls, insbesondere der Führung der einzelnen Verbindungsleitungen zwischen diesen und der Anzahl der zu kühlenden, einem unterschiedlichen System entstammenden Medien. So ist es beispielsweise bei Ausführungen mit an einer Verbrennungskraftmaschine angeflanschtem Getriebe denkbar, die Wärmetauscherbaueinheit 1 zwischen Verbrennungskraftmaschine und Getriebebaueinheit anzuordnen und sowohl den Motorkühlkreislauf als auch das Steuer- und/oder Schmiermittel des Getriebes über die Wärmetauscherbaueinheit zu kühlen. Dies gilt auch für die Kühlmittelkanäle 6. Diesen sind wenigstens ein zentraler Zuführkanal 9 und ein zentraler Abführkanal für das Kühlmedium zugeordnet. Die einzelnen Betriebs- und/oder Steuerund/oder Schmiermittel-Führungskanäle 5 bilden dabei die Verbindungskanäle zwischen dem zentralen Zuführkanal 7 und dem zentralen Abführkanal 8, während die Kühlmittelkanäle 6 die Verbindungskanäle zwischen dem zentralen Zuführkanal 9 und dem zentralen Abführkanal 10 bilden. Bei der in der Figur 1 dargestellten Ausführung ist die äußere Kontur 2 derart ausgestaltet, dass das Gehäuse 4 des Wärmetauschermoduls 3 in Einbaulage im Querschnitt betrachtet U-förmig ausgebildet ist. Die zentralen Zuführ- und Abführkanäle 7, 9 bzw. 8 und 10 können dabei an beliebiger Stelle angeordnet sein, beispielsweise sind die zentralen Zuführkanäle 7 und 9 auf unterschiedlichen Seiten angeordnet, ebenso die Abführkanäle 8 und 10, so dass Kühlmittel und zu kühlendes Medium zueinander entgegengesetzt den Modul 3 durchströmen. Die andere hier dargestellte Möglichkeit beinhaltet die Anordnung der zentralen Zuführkanäle 7 und 9 und Abführkanäle 8 und 10 auf jeweils einer gemeinsamen Seite. Das Gehäuse 4 des Wärmetauschermoduls 3 ist durch zwei Schenkel 11 und 12 beschreibbar, welche beidseitig der An- und/oder Abtriebswelle E bzw. A angeordnet sind und über ein Verbindungselement 13 miteinander gekoppelt sind.

Die in Figur 1a dargestellte Anordnung der Wärmetauscherbaueinheit 1 mit u-förmiger Kontur ist eine Möglichkeit. Anordnungen verschwenkt in Umfangsrichtung sind ebenfalls denkbar.

Demgegenüber verdeutlicht die Figur 1 b eine Ausführung, bei welcher ein einziger Wärmetauschermodul 3.1 b vorgesehen ist, dessen Gehäuse 4.1 b eine im wesentlichen im Querschnitt betrachtete Ringsegmentkontur aufweist. Dies ermöglicht eine optimale Anpassung an die An- und/oder Abtriebswelle E bzw. A, wobei die Wärmetauscherbaueinheit 1.1 b aufgrund der Anpassung an den Radius der An- und/oder Abtriebswelle E bzw. A mit geringerer Baugröße als in der Figur 1 a dargestellt auskommen kann. Allerdings bedeutet dies eine jeweils erforderliche Anpassung an den konkreten Einzelfall. Bezüglich des Aufbaus des Wärmetauschermoduls hinsichtlich der Betriebs- und/oder Steuer- und/oder Schmiermittel-Führungskanäle 5 und der Kühlmittelkanäle 6 sowie der Zuführkanäle und Abführkanäle 7, 9 bzw. 8, 10 kann auf die Figur 1a verwiesen werden.

Bei den in den Figuren 1 a und 1 b dargestellten Ausführungen erstreckt sich die Wärmetauscherbaueinheit 1 bzw. 1.1b in Umfangsrichtung betrachtet im wesentlichen über einen Winkel von 270° um die An- und/oder Abtriebswelle E bzw. A. Diese Lösung bietet den Vorteil, dass auch bei Integration der Wärmetauscherbaueinheit 1 oder dem unmittelbaren Anbau an das Gehäuse eines Antriebssystemaggregates dieser eine hohe Kapazität aufweisen kann.

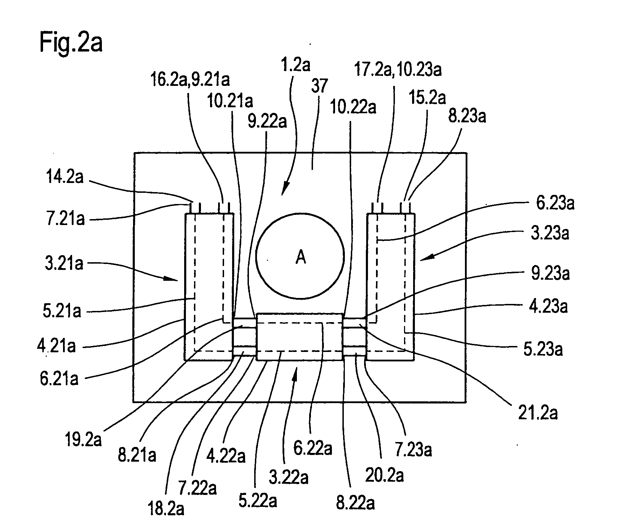

Die Figuren 2a bis 2c verdeutlichen in schematisiert vereinfachter Darstellung zwei grundsätzliche weitere Möglichkeiten des Aufbaus einer Wärmetauscherbaueinheit 1.2a, 1.2b und 1.2c. Die Wärmetauscherbaueinheit 1.2a besteht dabei aus einer Mehrzahl von Wärmetauschermodulen 3.21a, 3.22a und 3.23a, wobei diese in platzsparender Anordnung U-förmig um einen Antrieb oder Abtrieb angeordnet werden können und über Verbindungskanäle zu der Wärmetauscherbaueinheit 1.2a als bauliche Einheit zusammengefasst werden können. Die einzelnen Wärmetauschermodule 3.21a, 3.22a und 3.23a können dabei in einem, hier nicht dargestellten, gemeinsamen Gehäuse angeordnet werden, entsprechend gilt dies auch für die Verbindungskanäle, oder aber, wie in Figur 2a dargestellt, weist jeder Wärmetauschermodul ein eigenes Gehäuse 4.21 a, 4.22a und 4.23a auf. Jedes Gehäuse weist dabei einen eigenen zentralen Zuführkanal 7.21 a, 7.22a und 7.23a sowie einen zentralen Abführkanal 8.21 a, 8.22a und 8.23a für Betriebs- und/oder Steuer- und/oder Schmiermittel auf. Die einzelnen Zuführkanäle 7.21 a, 7.22a und 7.23a sind jeweils mit dem zentralen Abführkanal 8.21 a, 8.22a bzw. 8.23a über Betriebs- und/oder Steuer- und/oder Schmiermittel-führende Leitungen bzw. Kanäle 5.21a, 5.22a bzw. 5.23a verbunden, hier durch unterbrochene Linien verdeutlicht. Dies gilt in Analogie auch für die Kühlmittel-führende Kanäle. Jeder Wärmetauschermodul 3.21 a, 3.22a und 3.23a weist dabei wenigstens einen zentralen Zuführkanal 9.21 a, 9.22a und 9.23a für das Kühlmedium und einen zentralen Abführkanal 10.21a, 10.22a und 10.23a auf. Dabei sind im dargestellten Fall die einzelnen Zuführkanäle 7.21a, 7.22a und 7.23a bzw. die Abführkanäle 8.21 a, 8.22a und 8.23a sowie 9.21 a, 9.22a, 9.23a bzw. 10.21a, 10.22a und 10.23a miteinander gekoppelt, so dass die gesamte Wärmetauscherbaueinheit 1.2a lediglich nur einen zentralen Betriebs- und/oder Steuer- und/oder Schmiermitteleintritt 14.2a und einen Betriebs- und/oder Steuerund/oder Schmiermittelaustritt 15.2a sowie einen zentralen Kühlmitteleintritt 16.2a und einen Kühlmittelaustritt 17.2a aufweist. Der zentrale Betriebs- und/oder Steuer- und/oder Schmiermitteleintritt 14.2a wird dabei vom zentralen Zuführkanal 7.21a des ersten Moduls 3.21a gebildet, während der zentrale Betriebs- und/oder Steuer- und/oder Schmiermittelaustritt 15.2a vom Abführkanal 8.23a des dritten Moduls 3.23a gebildet wird. Der zentrale Kühlmitteleintritt 16.2a der Wärmetauscherbaueinheit 1.2a wird dabei vom zentralen Zuführkanal 9.21 a des ersten Wärmetauschermoduls 3.21a und der Kühlmittelaustritt 17.2a vom Abführkanal 10.23a des dritten Wärmetauschermoduls 3.23a gebildet. Eine andere Zuordnung zu irgendeinem Modul ist ebenfalls denkbar. Die Kopplung der einzelnen Module 3.21 a, 3.22a, 3.23a erfolgt über Verbindungsleitungen, im dargestellten Fall ist der zum Wärmetauschermodul 3.21a gehörende zentrale Abführkanal 8.21a für Betriebs- und/oder Steuer- und/oder Schmiermittel mit dem zentralen Zuführkanal 7.22a des zweiten Wärmetauschermodules über die Verbindungsleitung 18.2a für Betriebs- und/oder Steuer- und/oder Schmiermittel gekoppelt. Der Kühlmittelübergang erfolgt über die Verbindungsleitung 19.2a, welche den Abführkanal 10.21a mit dem Zuführkanal 9.22a des zweiten Wärmetauschermodules 3.22a verbindet. Dies gilt in Analogie auch für die Kopplung zwischen dem zweiten Wärmetauschermodul 3.22a mit dem dritten Wärmetauschermodul 3.23a. Diese werden durch die Verbindungsleitungen 20.2a für das Betriebs- und/oder Steuer- und/oder Schmiermittel und die Verbindungsleitung 21.2a für das Kühlmedium realisiert.

Bei der in der Figur 2a dargestellten Ausführung handelt es sich um eine besonders einfach zu realisierende Ausführung, welche ein optimales Umschließen eines Drehmoment übertragenden Elementes mit geringem Durchmesser ermöglicht und somit eventuell vorhandene Leerräume im Antriebsstrang optimal ausnutzen kann, wobei hier standardisierte Ausführungen von Wärmetauschem Verwendung finden können, die als einzelne Wärmetauschermodule zu einer Wärmetauscherbaueinheit 1.2a zusammengefügt werden können. Die Zusammenfügung erfolgt dabei auf einfache Art und Weise. Dabei muss auch keine Rücksicht auf Abmessungen in horizontaler und vertikaler Richtung des Antriebsstrangs genommen werden, bei dieser Ausführung können standardisierte Wärmetauschermodule Verwendung finden. Die in der Figur 2a dargestellte Ausführung ist eine Möglichkeit. Denkbar ist auch eine in Umfangsrichtung erfolgende Anordnung von mehreren kleinen Wärmetauschermodulen, wobei jedoch hier der Verbindungsaufwand größer ist. Insbesondere durch Vorsehen einer Vielzahl von Wärmetauschermodulen kann die äußere Kontur 2.2a der Wärmetauscherbaueinheit 1.2a sehr stark an den Außenumfang der An- und/oder Abtriebswelle E bzw. A angepasst werden und somit in jedem Bereich ein minimaler Abstand zwischen dem Drehmoment übertragenden Element, insbesondere dem Außenumfang der An- und/oder Abtriebswelle E bzw. A und den in radialer Richtung von diesem ausgesehen inneren Abmessungen der Wärmetauscherbaueinheit 1.2a, realisiert werden.

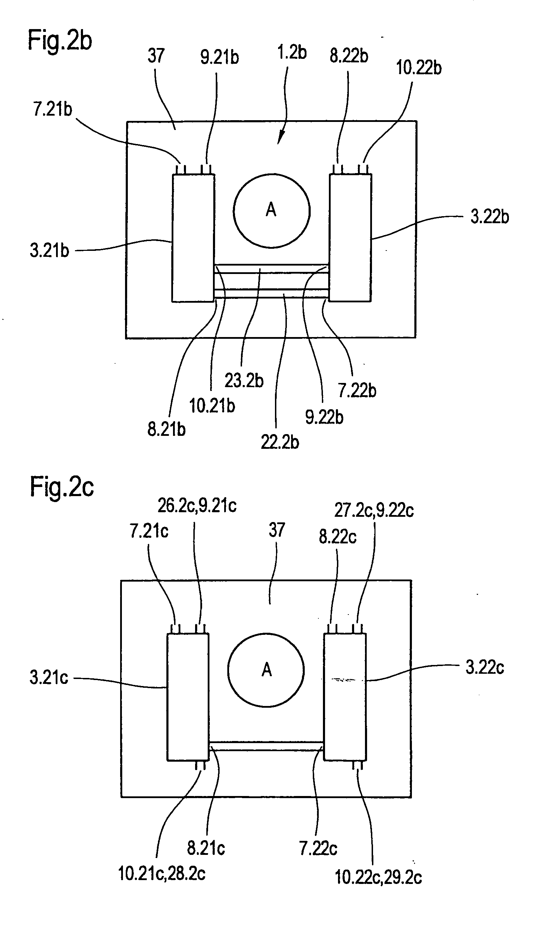

Die Figur 2b verdeutlicht eine weitere Ausgestaltung einer Wärmetauscherbaueinheit 1.2b, welche in radialer Richtung ein Element einer Drehmoment übertragend oder wandelnden Antriebskomponente in Form einer An- und/oder Abtriebswelle E bzw. A in Umfangsrichtung wenigstens teilweise umschließt. Diese Ausführung ist durch die beidseitige Anordnung von Wärmetauschermodulen 3.21 b und 3.22b neben einer An- und/oder Abtriebswelle E bzw. A charakterisiert, wobei diese über entsprechende Verbindungskanäle miteinander gekoppelt sind. Bei der in der Figur 2b dargestellten Ausführung handelt es sich um zwei Module 3.21 b und 3.22b mit jeweils eigenem zentralen Zuführkanal 7.21b und 7.22b für Betriebs- und/oder Steuer- und/oder Schmiermittel und einem zentralen Abführkanal 8.22b und 8.21 b. Dies gilt auch für das Kühlmedium. Hier sind jeweils zentrale Zuführkanäle 9.21b und 9.22b und ein zentraler Abführkanal 10.21b und 10.22b vorgesehen. Die Kopplung des ersten Wärmetauschermoduls 3.21 b mit dem zweiten Wärmetauschermodul 3.22b erfolgt über eine Verbindungsleitung 22.2b für Betriebs- und/oder Steuer- und/oder Schmiermittel und einer Verbindungsleitung 23.2b für das Kühlmittel.

Demgegenüber offenbart die Figur 2c eine Ausführung, bei welcher die Wärmetauscherbaueinheit 1.2c ebenfalls aus zwei Wärmetauschermodulen 3.21 c und 3.22c besteht, wobei beide hinsichtlich der Kühlmittelkanäle jedoch abgeschlossene Module bilden. Dies bedeutet, dass jeder Wärmetauschermodul 3.21c und 3.22c über einen eigenen zentralen Zuführkanal 9.21c und 9.22c sowie einen eigenen Abführkanal 10.21c und 10.22c verfügt, wobei die einzelnen Wärmetauschermodule 3.21c und 3.22c diesbezüglich nicht miteinander gekoppelt sind und lediglich eine Kopplung bezüglich der Führung des Betriebs- und/oder Steuer- und/oder Schmiermittels erfolgt. Zu diesem Zweck sind der zentrale Abführkanal 8.21c und der zentrale Zuführkanal 7.22c des zweiten Wärmetauschermoduls 3.22c miteinander gekoppelt. Der zentrale Zuführkanal 7.21c bildet dabei den zentralen Betriebs- und/oder Steuer- und/oder Schmiermitteleintritt 24.2c, während der zentrale Abführkanal 8.22c gleichzeitig den zentralen Betriebs- und/oder Steuer- und/oder Schmiermittelaustritt 25.2c bildet. Die Wärmetauscherbaueinheit 2.2c umfasst des weiteren zwei zentrale Kühlmitteleintritte, welche von den Zuführkanälen 9.21 c und 9.22c gebildet werden und hier mit 26.2c und 27.2c bezeichnet sind und des weiteren zwei zentrale Kühlmittelaustritte, die hier mit 28.2c und 29.2c bezeichnet sind. Die zentrale Kühlmittelaustritte 28.2c und 29.2c werden dabei von den einzelnen Kühlmittel-Abführkanälen 10.21 c und 10.22c der einzelnen Wärmetauschermodule 3.21 c und 3.22c gebildet. Bei dieser Ausführung erfolgt dabei lediglich ein Wärmeaustausch in einzelnen Teilbereichen in Umfangsrichtung betrachtet um eine An- und/oder Abtriebswelle E bzw. A. Auch diese Ausführung ist aus Standardmodulen relativ einfach herstellbar.

Bei den in den Figuren 2a bis 2c dargestellten Ausführungen können die einzelnen Wärmetauschermodule in einem gemeinsamen Gehäuse integriert sein, welches hinsichtlich seiner Außenkontur derart ausgeführt ist, dass ein An- oder Abtrieb eines drehmomentübertragenden oder -wandeInden Elementes in Umfangsrichtung wenigstens teilweise umschlossen wird. Die andere Möglichkeit besteht darin, jedes Wärmetauschermodul mit einem eigenen Gehäuse auszustatten, wobei die einzelnen Module dann über entsprechende außerhalb der Gehäuse geführte Verbindungsleitungen miteinander gekoppelt sind.

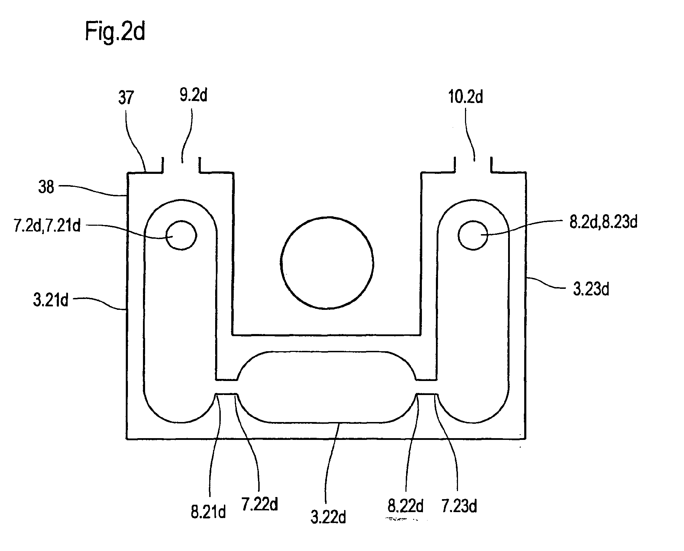

Die Figur 2d offenbart eine Ausführung einer Wärmetauscherbaueinheit 1.2d, umfassend ein Gehäuse 38, welches im Querschnitt betrachtet U-förmig ausgestaltet ist und mit den beiden Schenkel 40 und 41 bildenden Bereichen einen An- oder Abtrieb eines drehmomentübertragenden oder -wandelnden Bauelementes umschließt. Im Gehäuse angeordnet sind betriebs- und/oder steuer- und/oder schmiermittelführende Einheiten, welche den einzelnen Wärmetauschermodulen 3.21d, 3.22d und 3.23d zuzuordnen sind. Jeder dieser Module 3.21d, 3.22d und 3.23d umfasst einen zentralen Zufuhrkanal 7.21d bis 7.23d für Betriebs- und/oder Steuer- und/oder Schmiermittel sowie einen zentralen Abfuhrkanal 8.21d bis 8.23d. Die einzelnen Module 3.21d, 3.22d und 3.23d sind jeweils im Bereich ihrer zentralen Zu- und Abführkanäle 8.21d, 7.22d und 8.22d und 7.23d miteinander verbunden. Der zentrale Zufuhrkanal 7.21d des ersten Moduls 3.21d bildet dabei gleichzeitig den zentralen Zufuhrkanal 7.2d der Wärmetauscherbaueinheit 1.2d. Der zentrale Abfuhrkanal 8.23d des dritten Modules 3.23d bildet dabei den zentralen Abfuhrkanal 8.2d der Wärmetauscherbaueinheit 1.2d. Allen gemeinsam ist der kühlmittelführende Teil zugeordnet, welcher vom Gehäuse 37, insbesondere der Gehäusewand 38 gebildet wird. Hierzu weist das Gehäuse einen zentralen Zufuhrkanal 9.2d für das Kühlmedium und einen zentralen Abfuhrkanal 10.2d auf. Das Kühlmedium umströmt dabei alle drei Module 3.21d, 3.22d und 3.23d. Andere Ausführungen sind ebenfalls denkbar.

Die in den Figuren 1a, 1b und 2a bis 2d dargestellten Ausführungen sind vorteilhafte Ausgestaltungen der erfindungsgemäßen Lösung, welche jedoch keine abschließende Aufzählung darstellen. Weitere Möglichkeiten sind denkbar. Die Figuren dienen lediglich der Verdeutlichung möglicher Grundaufbauten.

Für alle Ausführungen gemäß der Figuren 1 und 2 gilt, dass bezüglich des Aufbaus der einzelnen Wärmetauschermodule keine Restriktionen bestehen. Die dargestellten Ausführungen beziehen sich auf Ausführungen mit lediglich einem Kühlmedium. Es ist jedoch auch denkbar, dass zwei unterschiedliche Kühlmedien verwendet werden, die das Betriebs- und/oder Steuer- und/oder Schmiermittel jeweils beidseitig umströmen. Es ist jedoch auch denkbar, die Verbindungskanäle zwischen den einzelnen zentralen Zuführ- und Abführkanälen für Kühlmittel derart zu gestalten, dass innerhalb des Wärmetauschermoduls eine Aufteilung des Kühlmittels in zwei Teilströme erfolgt, welche wiederum ebenfalls das Betriebsund/oder Steuer- und/oder Schmiermittel beidseitig umströmen. Des weiteren kann mit einer derartigen Modifizierung für die Kühlmittelkanäle auch eine Modifizierung hinsichtlich der Führung unterschiedlicher Betriebs- und/oder Steuer- und/oder Schmiermittel erfolgen. Des weiteren kann der Wärmetauschermodul in Plattenbauart oder Schalenbauart ausgeführt sein. Diesbezüglich kann auf jegliche herkömmliche Wärmetauscherbaueinheiten zurückgegriffen werden.

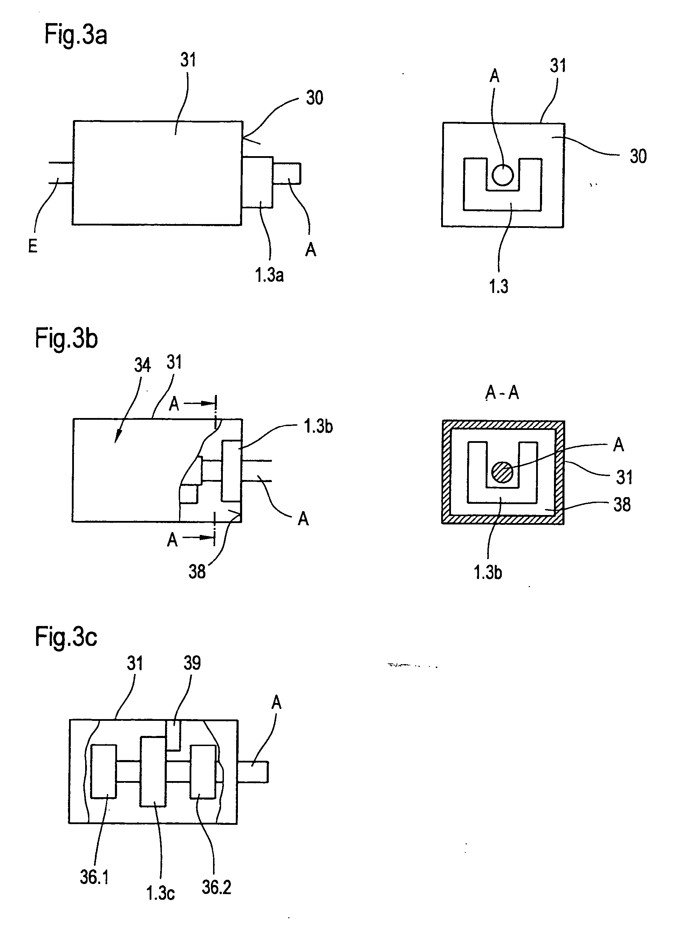

Die Figuren 3a, 3b und 3c verdeutlichen konkrete Anordnungsmöglichkeiten einer erfindungsgemäß gestalteten Wärmetauscherbaueinheit 1.

Die Figur 3a verdeutlicht dabei eine Ausführung mit an einer Stirnseite 30 eines Antriebssystemaggregates 31, beispielsweise in Form einer Antriebsmaschine oder einer Getriebebaueinheit, angeflanschten Wärmetauscherbaueinheit 1.3a. Dabei erstreckt sich die Wärmetauscherbaueinheit 1.3a in radialer Richtung betrachtet in Umfangsrichtung wenigstens teilweise um die An- oder Abtriebswelle A bei Getriebebaueinheiten bzw. E in Form einer Antriebswelle bei Antriebsmaschinen, beispielsweise in Form eines Elektromotors. Die Befestigung kann dabei auf herkömmliche Art und Weise am Gehäuse 32 des Antriebssystemaggregates erfolgen, beispielsweise kraft- und/oder formschlüssig, wobei diese Kopplungen lösbar sind.

Die Figur 3b verdeutlicht eine Ausführung mit Anordnung einer erfindungsgemäß gestalteten Wärmetauscherbaueinheit 1.3b im Gehäuse 31 eines Antriebssystemaggregates in Form einer Getriebebaueinheit 34. Dabei ist die Wärmetauscherbaueinheit 1.3b innen an einer Gehäusewand 38 angeflanscht und umschließt in Kraftflussrichtung betrachtet die Getriebeausgangswelle A in Umfangsrichtung wenigstens teilweise.

Demgegenüber offenbart die Figur 3c eine weitere mögliche Ausgestaltungsmöglichkeit, bei welcher die Integration einer erfindungsgemäß gestalteten Wärmetauscherbaueinheit 1.3c in einem Antriebssystemaggregat 35 in Form einer Getriebebaueinheit erfolgt, wobei die Anordnung durch zwischen leistungsübertragenden Elementen vorgesehen ist, hier schematisch vereinfacht verdeutlicht in Form von Drehzahl-/Drehmoment wandelnden Baueinheiten 36.1 bis 36.2. Dabei wird der in radialer Richtung aufgrund einer Kopplung zwischen den einzelnen Drehzahl-/Drehmoment wandelnden Baueinheiten vorhandene Platz in radialer Richtung optimal ausgenutzt. Die Anbindung der Wärmetauscherbaueinheit 1.3c kann beispielsweise an eine Zwischenwand 39 erfolgen.

Die erfindungsgemäße Lösung ist nicht auf die konkreten Ausführungsbeispiele in den Figuren 1 bis 3 beschränkt. Erfindungswesentlich ist lediglich die Ausgestaltung einer Wärmetauscherbaueinheit derart, dass diese in radialer Richtung betrachtet eine An- bzw. Abtriebswelle bzw. einen An- bzw. Abtrieb in Umfangsrichtung wenigstens teilweise, in einer bevorzugten Ausführung über wenigstens einen Bereich von > 90° bis < 160°, umschließt. Für die Anordnung in Umfangsrichtung werden dabei Drehmoment übertragende Einheiten herangezogen, welche einen geringen radialen Durchmesser gegenüber den anderen Elementen eines Antriebssystems aufweisen, so dass hier der in radialer Richtung ansonsten freibleibende Bauraum optimal ausgenutzt werden kann. Dies führt auch dazu, dass die Antriebssysteme bei ihrer Auslegung hinsichtlich des in radialer Richtung zur Verfügung stehenden Bauraumes nicht überdimensioniert werden müssen, da hier ohnehin vorhandener Totraum verwendet werden kann.

### Bezugszeichenliste

- 1, 1.1b, 1.2a, 1.2b, 1.2c, 1.3a, 1.3b, 1.3d: Wärmetauscherbaueinheit
- 2, 2.1b, 2.2a, 2.2b, 2.2c, 2.3a, 2.3b: äußere Kontur
- 3, 3.1b, 3.21a, 3.22a, 3.23a,: Wärmetauschermodul
- 3.21b, 3.22b, 3.21c, 3.22c, 3.21d, 3.22d, 3.23d, 4, 4.1b, 4.21a, 4.22a, 4.23a, 4.21b, 4.22b, 4.21c, 4.22c: Gehäuse der Wärmetauschermodule
- 5: Betriebs- und/oder Steuer- und/oder Schmiermittel-Führungskanäle
- 6: Kühlmittelkanal
- 7, 7.21a, 7.22a, 7.23a, 7.21b, 7.22b, 7.21c, 7.22c, 7.21d, 7.22d, 7.23d: zentraler Zuführkanal
- 8, 8.21a, 8.22a, 8.23a, 8.21b, 8.22b, 8.21c, 8.22c, 8.21d, 8.22d, 8.23d: zentraler Abführkanal
- 9, 9.21a, 9.22a, 9.23a, 9.21b, 9.22b, 9.21c, 9.22c: zentraler Zuführkanal
- 10, 10.21a, 10.22a, 10.23a, 10.21b, 10.22b, 10.21c, 10.22c: zentraler Abführkanal
- 11: Schenkel
- 12: Schenkel
- 13: Verbindungselement
- 14.2a: zentraler Betriebs- und/oder Steuer-und/oder Schmiermitteleintritt
- 15.2a: zentraler Betriebs- und/oder Steuer-und/oder Schmiermittelaustritt
- 16.2a: zentraler Kühlmitteleintritt
- 17.2a: zentraler Kühlmittelaustritt
- 18.2a: Verbindungsleitung für Betriebs- und/oder Steuer- und/oder Schmiermittel
- 19.2a: Verbindungsleitung für Betriebs- und/oder Steuer- und/oder Schmiermittel
- 20.2a: Verbindungsleitung für Kühlmittel
- 21.2a: Verbindungsleitung für Kühlmedium
- 22.2b: Verbindungsleitung
- 23.2b: Verbindungsleitung
- 24.2c: zentraler Betriebs- und/oder Steuer-und/oder Schmiermittel
- 25.2c: zentraler Betriebs- und/oder Steuer-und/oder Schmiermittelaustritt
- 26.2c: zentraler Kühlmitteleintritt
- 27.2c: zentraler Kühlmitteleintritt
- 28.2c: zentraler Kühlmittelaustritt
- 29.2c: zentraler Kühlmittelaustritt
- 30: Stirnseite
- 31: Antriebssystemaggregat
- 32: Gehäuse
- 33: Gehäuse
- 34: Getriebebaueinheit
- 35: Getriebebaueinheit
- 36.1, 36.2: Drehzahl-/Drehmomentwandelnde Baueinheiten
- 37: Gehäuse
- 38: Gehäusewand
- 39: Zwischenwand
- 40: Schenkel
- 41: Schenkel
- A: An- oder Abtriebswelle

## Patentansprüche

1. Wärmetauscherbaueinheit (1, 1.1b, 1.2a, 1.2b, 1.2c, 1.3a, 1.3b, 1.3d) in optimierter Bauweise zur Anordnung an oder in drehmomenterzeugenden oder drehmomentübertragenden Antriebskomponenten;
1.1 mit mindestens einem Wärmetauschermodul (3, 3.1 b, 3.21 a, 3.22a, 3.23a, 3.21b, 3.22b, 3.21c, 3.22c, 3.21d, 3.22d, 3.23d); **gekennzeichnet durch** das folgende Merkmal:
die Geometrie der Außenabmessung der Wärmetauscherbaueinheit (1, 1.1 b, 1.2a, 1.2b, 1.2c, 1.3a, 1.3b, 1.3d) ist derart gewählt, dass diese sich in radialer Richtung wenigstens über einen Teilbereich in Umfangsrichtung um einen An- oder Abtrieb (A) erstreckt.

2. Wärmetauscherbaueinheit (1, 1.1b, 1.2a, 1.2b, 1.2c, 1.3a, 1.3b, 1.3d) nach Anspruch 1, **dadurch gekennzeichnet, dass** die zwischen den in Umfangsrichtung weisenden und die äußeren Abmessungen charakterisierenden Elemente der Wärmetauscherbaueinheit (1, 1.1b, 1.2a, 1.2b, 1.2c, 1.3a, 1.3b, 1.3d) einen Winkel von > 90 Grad bis < 360 Grad beschreiben.

3. Wärmetauscherbaueinheit (1, 1.1 b, 1.2a, 1.2b, 1.2c, 1.3a, 1.3b, 1.3d) nach Anspruch 1 oder 2, **dadurch gekennzeichnet, dass** diese zwischen den in Umfangsrichtung weisenden und die äußeren Abmessungen charakterisierenden Elementen der Wärmetauscherbaueinheit (1, 1.1 b, 1.2a, 1.2b, 1.2c, 1.3a, 1.3b, 1.3d) einen Winkel von > 180 Grad bis < 270 Grad beschreiben.

4. Wärmetauscherbaueinheit (1, 1.1 b, 1.2a, 1.2b, 1.2c, 1.3a, 1.3b, 1.3d) nach einem der Ansprüche 1 bis 3, **gekennzeichnet durch** die folgenden Merkmale:
4.1 mit wenigstens zwei Wärmetauschermodulen (3, 3.1 b, 3.21 a, 3.22a, 3.23a, 3.21b, 3.22b, 3.21c, 3.22c, 3.21d, 3.22d, 3.23d), umfassend jeweils eine betriebs- und/oder schmier- und/oder steuermittelführende Einheit, denen jeweils wenigstens ein zentraler Zuführkanal (7, 7.21a, 7.22a, 7.23a, 7.21b, 7.22b, 7.21c, 7.22c, 7.21d, 7.22d, 7.23d) für Betriebs- und/oder Steuer- und/oder Schmiermittel und wenigstens ein zentraler Abführkanal (8, 8.21a, 8.22a, 8.23a, 8.21 b, 8.22b, 8.21 c, 8.22c, 8.21d, 8.22d, 8.23d) für Betriebs- und/oder Steuer- und/oder Schmiermittel zugeordnet ist;
4.2 zwei einander benachbart angeordnete betriebs- und/oder steuer- und/oder schmiermittelführende Einheiten sind jeweils über den zentralen Abführkanal (8, 8.21a, 8.22a, 8.23a, 8.21b, 8.22b, 8.21c, 8.22c, 8.21d, 8.22d, 8.23d) für Betriebs- und/oder Steuer- und/oder Schmiermittel mit dem zentralen Zuführkanal (7, 7.21 a, 7.22a, 7.23a, 7.21b, 7.22b, 7.21c, 7.22c, 7.21d, 7.22d, 7.23d) für Betriebs- und/oder Steuer- und/oder Schmiermittel an der in Umfangsrichtung nachgeordneten betriebsund/oder steuer- und/oder schmiermittelführenden Einheit verbunden;
4.3 der zentrale Zuführkanal (7, 7.21a, 7.22a, 7.23a, 7.21 b, 7.22b, 7.21 c, 7.22c, 7.21d, 7.22d, 7.23d) für Betriebs- und/oder Steuer- und/oder Schmiermittel an der ersten betriebs- und/oder steuer- und/oder schmiermittelführenden Einheit bildet den zentralen Zuführkanal für Betriebs- und/oder Steuerund/oder Schmiermittel der Wärmetauscherbaueinheit (1, 1.1b, 1.2a, 1.2b, 1.2c, 1.3a, 1.3b, 1.3d);
4.4 der in Umfangsrichtung betrachtet freie zentrale Abführkanal (8, 8.21 a, 8.22a, 8.23a, 8.21b, 8.22b, 8.21c, 8.22c, 8.21d, 8.22d, 8.23d) für Betriebsund/oder Steuer- und/oder Schmiermittel bildet den zentralen Abführkanal (15.2a) für Betriebs- und/oder Steuer- und/oder Schmiermittel an der Wärmetauscherbaueinheit (1, 1.1 b, 1.2a, 1.2b, 1.2c, 1.3a, 1.3b, 1.3d);
4.5 mit einem Gehäuse, in welchem die betriebs- und/oder schmiermittelund/oder steuermittelführenden Einheiten angeordnet sind, umfassend mindestens einen zentralen Zuführkanal (9, 9.21 a, 9.22a, 9.23a, 9.21 b, 9.22b, 9.21 c, 9.22c) für Kühlmedium und einen zentralen Abführkanal für Kühlmedium (10, 10.21a, 10.22a, 10.23a, 10.21b, 10.22b, 10.21c, 10.22c).

5. Wärmetauscherbaueinheit (1, 1.1 b, 1.3) nach einem der Ansprüche 1 bis 4, **gekennzeichnet durch** die folgenden Merkmale:
5.1 die Wärmetauscherbaueinheit (1, 1.1b, 1.3a, 1.3b) umfassen ein Wärmetauschermodul /3, 3.1 b, 3.3);
5.2 der Wärmetauschermodul (3, 3.1 b, 3.3) umfasst ein Gehäuse (4, 4.1 b, 4.3), wenigstens einen zentralen Zuführkanal (7) und einen zentralen Abführkanal (8) für das Betriebs- und/oder Steuer- und/oder Schmiermittel, die miteinander über Betriebs- und/oder Steuer- und/oder Schmiermittelkanäle miteinander gekoppelt sind;
5.3 mit mindestens einem zentralen Zuführkanal (9) für ein Kühlmedium und einem zentralen Abführkanal (10) für das Kühlmedium, welche miteinander über wenigstens einen Kühlmediumkanal (19) gekoppelt sind.

6. Wärmetauscherbaueinheit (1, 1.1a, 1.3b) nach Anspruch 5, **dadurch gekennzeichnet, dass** das Gehäuse (4) im Querschnitt betrachtet U-förmig gestaltet ist.

7. Wärmetauscherbaueinheit (1.1b) nach Anspruch 5, **dadurch gekennzeichnet, dass** das Gehäuse (4.1 b) im Querschnitt betrachtet kreisringsegmentförmig ausgeführt ist.

8. Wärmetauscherbaueinheit (1.2a, 1.2b, 1.2c, 1.3d) nach einem der Ansprüche 1 bis 3, **gekennzeichnet durch** die folgenden Merkmale:
8.1 mit mindestens zwei Wärmetauschermodulen (3.21 a, 3.22a, 3.23a; 3.21 b, 3.22b, 3.23b, 3.21c, 3.22c, 3.23c, 3.21d, 3.22d, 3.23d) umfassend jeweils einen zentralen Zuführkanal (7.21 a, 7.22a, 7.23a; 7.21 b, 7.22b, 7.23b; 7.21 c, 7.22c, 7.23c; 7.21 d, 7.22d, 7.23d) für Betriebs- und/oder Steuerund/oder Schmiermittel und einen zentralen Zuführkanal (9.21 a, 9.22a, 9.23a; 9.21 b, 9.22b, 9.23b) für Kühlmedium sowie einen zentralen Abführkanal (8.21a, 8.22a, 8.23a, 8.21b, 8.22b, 8.21c, 8.22c, 8.21d, 8.22d, 8.23d) für Betriebs- und/oder Steuer- und/oder Schmiermittel und einen zentralen Abführkanal (10.21 a, 10.22a, 10.23a, 10.21 b, 10.22b, 10.21 c, 10.22c) für das Kühlmedium;
8.2 wenigstens der zentrale Abführkanal (8.21a, 8.22a, 8.23a, 8.21b, 8.22b, 8.21c, 8.22c, 8.21d, 8.22d, 8.23d) für Betriebs- und/oder Steuer- und/oder Schmiermittel und der zentrale Zuführkanal (7.21a, 7.22a, 7.23a; 7.21b, 7.22b, 7.23b; 7.21 c, 7.22c, 7.23c; 7.21d, 7.22d, 7.23d) für Betriebsund/oder Steuer- und/oder Schmiermittel zweier einander benachbart angeordneter Wärmetauschermodule (3.21 a, 3.22a, 3.23a, 3.21 b, 3.22b, 3.21 c, 3.22c, 3.21d, 3.22d, 3.23d) sind miteinander verbunden.

9. Wärmetauscherbaueinheit (1, 1.2a, 1.2b, 1.2c, 1.3d) nach Anspruch 8, **dadurch gekennzeichnet, dass** die zentralen Abführkanäle (10.21a, 10.22a, 10.23a, 10.21 b, 10.22b, 10.21 c, 10.22c) und der Zuführkanal (9.21 a, 9.22a, 9.23a, 9.21 b, 9.22b, 9.21 c, 9.22c) für Kühlmedium zweier einander benachbart angeordneter Wärmetauschermodule (3.1 b, 3.21 a, 3.22a, 3.23a,3.21b, 3.22b, 3.21c, 3.22c, 3.21d, 3.22d, 3.23d) miteinander über Verbindungsleitungen gekoppelt sind.

10. Wärmetauscherbaueinheit (1, 1.2a, 1.2b, 1.2c, 1.3d nach einem der Ansprüche 8 oder 9, **dadurch gekennzeichnet, dass** die Wärmetauschermodule (3.1b, 3.21a, 3.22a, 3.23a,3.21b, 3.22b, 3.21c, 3.22c, 3.21d, 3.22d, 3.23d) mit Abstand zueinander parallel oder in einem Winkel zueinander angeordnet sind.

11. Wärmetauscherbaueinheit (1,1.2a, 1.2b, 1.2c, 1.3d) nach einem der Ansprüche 8 bis 10, **dadurch gekennzeichnet, dass** die miteinander verbundenen Wärmetauschermodule (3, 3.1 b, 3.21 a, 3.22a, 3.23a, 3.21 b, 3.22b, 3.21c, 3.22c, 3.21d, 3.22d, 3.23d) U-förmig angeordnet sind.

12. Wärmetauscherbaueinheit (1, 1.1 b, 1.2a, 1.2b, 1.2c, 1.3a, 1.3b, 1.3d) nach Anspruch 11, **dadurch gekennzeichnet, dass** drei Wärmetauscherbaueinheiten vorgesehen sind, wobei jeder der Wärmetauscherbaueinheiten einem Schenkel beziehungsweise dem Verbindungsstück des U-förmigen Querschnitts zuzuordnen sind.

13. Wärmetauscherbaueinheit (1, 1.1 b, 1.2a, 1.2b, 1.2c, 1.3a, 1.3b, 1.3d) nach einem der Ansprüche 1 bis 12, **dadurch gekennzeichnet, dass** die Führung von Kühlmittel und Betriebs- und/oder Schmier- und/oder Steuermittel im einzelnen Modul (3, 3.1 b, 3.21 a, 3.22a, 3.23a, 3.21 b, 3.22b, 3.21 c, 3.22c, 3.21d, 3.22d, 3.23d) in Gleich- oder Gegenstromanordnung erfolgt.

14. Wärmetauscherbaueinheit (1, 1.1 b, 1.2a, 1.2b, 1.2c, 1.3a, 1.3b, 1.3d) nach einem der Ansprüche 1 bis 13, **dadurch gekennzeichnet, dass** die Betriebsund Steuer- und/oder Schmiermittelkanäle getrennt voneinander verlaufen.

15. Anordnung einer Wärmetauscherbaueinheit (1, 1.1b, 1.2a, 1.2b, 1.2c, 1.3a, 1.3b, 1.3d) gemäß einem der Ansprüche 1 bis 14 an einer Stirnfläche eines Gehäuses einer Antriebskomponente um den An- oder Abtrieb (A).

16. Anordnung einer Wärmetauscherbaueinheit (1, 1.1b, 1.2a, 1.2b, 1.2c, 1.3a, 1.3b, 1.3d) gemäß einem der Ansprüche 1 bis 15, an einer Stirnfläche eines Gehäuses in der Antriebskomponente um einen An- oder Abtrieb (A).

17. Anordnung einer Wärmetauscherbaueinheit (1, 1.1 b, 1.2a, 1.2b, 1.2c, 1.3a, 1.3b, 1.3d) gemäß einem der Ansprüche 1 bis 162 im Gehäuse zwischen drehzahl- und/oder drehmomentwandelnden Einheiten.
